# EUROPÄISCHE PATENTANMELDUNG

(11) **EP 4 449 879 A1**
(43) Veröffentlichungstag der Anmeldung: **23.10.2024**
(21) Anmeldenummer: 23169152.8
(22) Anmeldetag: 21.04.2023
(51) Int. Cl.: A23L 3/3571, A23L 15/00, A23L 27/60, A23B 5/16, A23B 5/005

(54) **VERFAHREN ZUR PASTEURISIERUNG VON MINDESTENS EINEM LEBENSMITTEL**

(71) Anmelder: EthicLine GmbH, 38104 Braunschweig (DE)
(72) Erfinder: SUDHOFF, Tobias, 48268 Greven (DE)
(74) Vertreter: Maikowski & Ninnemann Patentanwälte Partnerschaft mbB

(57) **Zusammenfassung**

Die vorliegende Erfindung betrifft ein Verfahren zur Pasteurisierung von mindestens einem eigelbhaltigen Lebensmittel, insbesondere zur Bereitstellung als Halbkonserve umfassend die Schritte: Zugabe mindestens einer Emulgatormischung umfassend im Wesentlichen eiklarfreies Eigelb und mindestens eine Phospholipase zu dem mindestens einem Lebensmittel, Erwärmen des mit der Eigelb-Phospholipase- Emulgatormischung versehenen Lebensmittel auf eine (Kern)Temperatur zwischen 63°C und 75 °C, bevorzugt zwischen 65°C und 75°C, insbesondere bevorzugt zwischen 68°C und 72°C, und Pasteurisieren des mit der Eigelb-Phospholipase- Emulgatormischung versehenen Lebensmittel für einen Zeitraum von 30-90 min, bevorzugt 35 - 70 Minuten, besonders bevorzugt 40-50 Minuten.

## Beschreibung

Die vorliegende Erfindung betrifft ein Verfahren zur Pasteurisierung von mindestens einem eigelbhaltigen Lebensmittel, insbesondere zur Bereitstellung als Halbkonserve.

### Beschreibung

Es ist bekannt, Lebensmittel, wie Milch, Frucht- und Gemüsesäfte und Flüssigei zum Zwecke der Haltbarkeit und Reduzierung von Keimen zu pasteurisieren. Pasteurisierung bezeichnet dabei die kurzzeitige Erwärmung von flüssigen oder pastösen Lebensmitteln auf Temperaturen von mindestens 72 °C (klassisches Verfahren von Pasteur) bis maximal 100 °C (*Hochpasteurisieren*) zur Abtötung der vegetativen Phasen von Mikroorganismen. Durch die kurze, 15 Sekunden bis wenige Minuten umfassende Zeitdauer der Hitzeeinwirkung und die mäßige Temperatur werden der Nährwert, der Geschmack und die Konsistenz des Lebensmittels nur unbedeutend verändert und dennoch die meisten Lebensmittelverderber wie Milchsäurebakterien und Hefen sowie viele krankheitserregende Bakterien wie Salmonellen und Brucellen zuverlässig abgetötet. Hitzeresistente Bakteriensporen sowie Sporen einiger Schimmelpilze überleben diese Behandlung zumindest teilweise. Da sie nicht keimfrei sind, müssen pasteurisierte Lebensmittel im Regelfall gekühlt gelagert werden und sind dann einige Tage bis einige Wochen haltbar.

Des Weiteren ist die Verwendung von Emulgationshilfen in der Nahrungsmittelindustrie bekannt.

Ein in einer Vielzahl von Lebensmitteln verwendete Emulgationshilfe ist Eigelb. So verfügt Eigelb über herausragende Emulsierungseigenschaften. Diese charakteristische Eigenschaft ergibt sich aus den Proteinwechselwirkungen und verleiht Lebensmitteln, wie Backwaren und eibasierten Sauce, die gewünschten rheologischen und texturalen Eigenschaften.

Die Nutzung von Eigelb als Emulgator (vor allem mit deren natürlichen Lecithinen als Phopholipiden) findet in vielen Bereichen der Nahrungsmittelproduktion statt und ist gerade dann wichtig, wenn, wie in der Bio-Industrie, auf künstliche Emulgatoren/Zusatzstoffe verzichten werden soll. Es kann in Mayonnaise, Cremes, Saucen, Gebäck, Pudding und vielen anderen Lebensmitteln eingesetzt werden. Problematisch ist jedoch die relativ geringe Denaturierungstemperatur von Eigelb-Proteinen. So denaturieren ab 58°C Alpha-Livetin, ab 63°C Ovotransferrin und ab 64°C Gamma-Livetin.

Außerdem bilden sich Granulae aus wasserlöslichen HDL-Phosphovitinkomplexen unter Temperatureinfluss. Diese komplexe Mischung kann bei Erhitzen für die typische körnige Konsistenz von denaturiertem Eigelb sowie dessen mangelnde Emulsionsfähigkeit bei entsprechender Hitzeeinwirkung verantwortlich sein. Diese Effekte liegen damit genau in einem für Pasteurisierung relevanten Temperaturbereich.

Entsprechend ist es schwierig eigelbhaltige Lebensmittel unter Anwendung von höheren Temperaturen haltbar zu machen bzw. zu pasteurisieren, da bereits ab Temperaturen von 58°C zumindest eine teilweise Denaturierung der Eigelbproteine auftritt, wodurch es zu einer massiven Verschlechterung der Emulsionseigenschaften von Eigelb kommt.

Damit ist es bei gleichbleibender Qualität der Konsistenz nicht möglich, diese Lebensmittel haltbar zu machen, weder als Halb- und schon gar nicht als Voll-Konserve.

Aufgabe der vorliegenden Erfindung war es demnach ein Verfahren zur Haltbarmachung eines eigelbhaltigen Lebensmittels, z.B. als Halbkonserve, mittels Pasteurisierung bereitzustellen, wobei sich die Emulsionseigenschaften des in dem Lebensmittel enthaltenen Eigelbes nicht verschlechtern.

Diese Aufgabe wird mit einem Verfahren mit den Merkmalen des Anspruchs 1 gelöst.

Entsprechend wird ein Verfahren zur Pasteurisierung von mindestens einem eigelbhaltigen Lebensmittel, insbesondere zur Bereitstellung als Halbkonserve, bereitgestellt, welches die folgenden Schritte umfasst:
- Zugabe mindestens einer Emulgatormischung umfassend ein im Wesentlichen eiklarfreies Eigelb und mindestens eine Phospholipase zu dem mindestens einem Lebensmittel;
- Optional Überführen des mit der Eigelb-Phospholipase- Emulgatormischung versehenen Lebensmittels in geeignete Verpackungen, wie z.B. Gläser oder natürlichere oder synthetischer Naturdarm;
- Erwärmen des mit der Eigelb-Phospholipase- Emulgatormischung versehenen Lebensmittel auf eine (Kern)Temperatur zwischen 63°C und 75 °C, bevorzugt zwischen 65°C und 75°C, insbesondere bevorzugt zwischen 68°C und 72°C , und
- Pasteurisieren des mit der Eigelb-Phospholipase- Emulgatormischung versehenen Lebensmittel für einen Zeitraum von 30-90 min, bevorzugt 35 - 70 Minuten, besonders bevorzugt 40-50 Minuten.

Es wird somit ein Verfahren bereitgestellt, mit welchem eigelbhaltige Lebensmittel erwärmt und pasteurisiert werden können, ohne dass es zu einem Verlust der emulgierenden Eigenschaften des Eigelbs und der damit verbundenen sensorischen Eigenschaften des pasteurisierten Produktes kommt. Überraschenderweise ergibt sich eine ausreichende Pasteurisierung bereits bei Temperaturen von unter 72°C, bevorzugt bei oder weniger 70°C, bevorzugt zwischen 68-70°C. Wie noch weiter unten ausgeführt, kann bei Einstellung eines jeweils spezifischen Verhältnisses von Zeit und Temperatur eine ausreichende Inaktivierung der Mikroorganismen im eigelbhaltigen Lebensmittel erreicht werden.

Im vorliegenden Verfahren wird im Wesentlichen eiklarfreies Eigelb als Emulgator verwendet. Dies hat sich als vorteilhaft erwiesen, da die wässrige und proteinreiche Phase des Eieiweißes oder Eiklars als negativ für die Wirkung der Phospholipasen erwiesen hat. "Im wesentlichen eiklarfrei" bedeutet dabei, dass das Eiklar vom Eigelb möglichst vollständig abgetrennt wird, bevorzugt zu mindestens 95 Vol%, und wenn überhaupt nur geringe Mengen an Eiklar noch im Eigelb enthalten sind.

Die Verwendung von Phospholipasen in der Lebensmittelindustrie ist bekannt. So können die emulgierenden Eigenschaften von Eigelb u.a. durch die Phospholipase A2 (PLA2) gesteuert und verbessert werden. PLA2 wandelt Phospholipide in Lyso-Phospholipide, die eine höhere Löslichkeit in Wasser aufweisen und so emulgierenden Eigenschaften in o/w-Emulsionen verbessern (K. Daimer, U. Kulozik, Food Hydrocolloids, 2009, 23: 1366-1373). Die Verwendung von Phospholipasen in Eigelb zum Zwecke der Pasteurisierung von Lebensmitteln ist nicht beschrieben.

Phospholipasen beeinflussen die Größe von Fettmycellen, die durch das Einkürzen einer der beiden Fettsäuren an den Phopholipiden verkleinert werden. Dabei wird die Phopholipidmembran kompakter ohne ihre alipathischen Eigenschaften zu verlieren und somit weiterhin grenzflächenaktive Mycellen zu bilden.

Ein weiterer emulgierender Effekt basiert auf der Eigenschaft der kompakteren Phospholipide, die insgesamt (auch als freie Moleküle) sich enger über intermolekulare Effekte (Wasserstoffbrückenbindungen, sterische Bedingungen u.ä.) an die sich entfaltenden Proteine im Prozess der Denaturierung bei Erwärmung zu binden. Durch Ihre Kompaktheit können sie eine Oberflächenschicht ("surface layer") auf den Proteinen bilden, was mit einer zweiten Fettsäure deutlich schlechter funktioniert. Durch diese Schicht können Proteinketten, die sich vernetzen, besser stabilisiert und gewissermaßen geschützt werden.

Insgesamt sind diese Effekte der Phospholipasen bekannt und sie werden als Stabilisatoren und Emulsionshilfen eingesetzt, Scher- und Bindekräfte in den entsprechend modifizierten Phasen weisen entsprechende rheologische Eigenschaften aus. Dabei werden diese Lipasen üblicherweise durch Erhitzen aktiviert (im Körper durch Trypsin) und durch Überschreiten einer bestimmten Temperatur (abhängig von der Art des Enzyms) wieder deaktiviert, damit diese später im Lebensmittel nicht weiter aktiv sind.

Die von den Phospholipasen modifizierten Phospholipide können durch die Bildung der beschriebenen Oberflächenschichten eine Art Schutzschicht um die Eigelbproteine legen, die der Denaturierung der Eigelbproteine entgegenwirken und deren Entfaltung und Netzbildung und anschließende irreversible Denaturierung verzögern. Dabei wird davon ausgegangen, dass die Bildung entsprechender Schutzfilme logischerweise umgekehrt äquivalent zum Radius der Mycellen stattfindet.

Des Weiteren gibt es noch zwei wesentliche Faktoren für die Effektivität der Phopholipasen: pH-Wert und Salzkonzentration. Ein alkalisches Milieu vermindert deren Effekt und eine zu hohe Salzkonzentration kann sogar den Effekt umkehren. Allerdings sind die Salzkonzentrationen derart hoch, dass sie in Lebensmitteln sensorisch so nicht vorkommen (0,5 molare Lösungen sind ungenießbar). Was den pH-Wert betrifft, so sollte dieser nicht in den basischen Bereich kippen (>pH7), da ein saures Milieu auf die Enzymaktivität großen Einfluss hat.

Mit dem vorliegenden Verfahren ist es möglich, die Lebensmittelsicherheit (Pathogenexitus) bei optimalen rheologischen Eigenschaften zu erreichen. So kann bei einer erreichten Kerntemperatur von 70°C und einer Behandlung der jeweiligen Lebensmittematrix über 45 Minuten eine ausreichende Lebensmittelsicherheit gewährleisten werden, ohne dass die emulgierenden Eigenschaften verloren gehen. Mit dem vorliegenden Verfahren können Halbkonserven mit einer Haltbarkeit von min. 9 Monaten bereitgestellt werden.

Es sei angermerkt, dass das vorliegende Verfahren besonders gut für die Bereitstellung von Halbkonserven geeignet ist. Halbkonserven werden per Definition zwischen 65 und 75°C erhitzt und die erreichte Haltbarkeit liegt im Range zwischen Pasteurisiertem und sterilisiertem (autoklavierten) Produkt. Das vorliegende Verfahren ermöglicht nunmehr ein Pasteurisieren über einen längeren Zeitraum ohne dass es zu einem Verlust der rheologischen Eigenschaften der Halbkonserve kommt.

Die in dem vorliegenden Verfahren verwendete Emulgatormischung aus Eigelb und mindestens einer Phospholipase wird in einem Prozess mit den folgenden Schritten hergestellt:
a) Bereitstellen von eiklarfreien Eigelb und Zugabe der mindestens einen Phospholipase zum Eigelb;
b) Aktivieren der mindestens einen Phospholipase durch Erwärmen und Halten der Mischung aus Eigelb und Phospholipase bei einer Temperatur zwischen 45°C und 60°C, bevorzugt zwischen 50°C und 60°C, insbesondere bevorzugt zwischen 53°C und 55°C, über einen Zeitraum von 1 bis 4 h, bevorzugt 2 bis 3 h, und
c) anschließende Deaktivierung der Phospholipase durch Erhitzen der Mischung aus Eigelb und Phospholipase auf eine Temperatur zwischen 60°C und 90°C, bevorzugt zwischen 65°C und 85°C, insbesondere bevorzugt zwischen 68°C und 80°C, ganz besonders bevorzugt zwischen 72°C und 78°C über einen Zeitraum von 5 bis 15 min, bevorzugt 6 bis 12 Minuten, und Erhalt der fertig einsetzbaren Emulgatormischung.

Es ist hervorzuheben, dass Temperatur und Zeit in Prozessschritt a) von der Aktivierungstemperatur der verwendeten Phospholipase abhängig sind. Die Aktivierung kann z.B. in einem Konvektomaten bei einer Luftfeuchtigkeit von 80-95% zur Vermeidung von Flüssigkeitsverlust erfolgen. Zur Vermeidung von Klumpenbildung ist zudem ein ständiges Rühren wünschenswert.

Auch die Deaktivierung in Prozessschritt c) wird bevorzugt unter ständigem Rühren durchgeführt, da es ansonsten zu einer Klumpenbildung kommt.

Die in nach Alktivierung und Deaktivierung erhaltene Eigelb - Phospholipase-Emulgatormischung weist eine puddingartige Konsistenz auf. Eine sensorische Prüfung der Eigelb - Phospholipase- Emulgatormischung ergibt, dass keine Bitterstoffe enthalten sind.

Die Eigelb - Phospholipase- Emulgatormischung kann zu einer habflüssigen Creme verarbeitet und verwendet werden, oder kann gefriergetrocknet werden und in Pulverform verwendet werden oder in tiefgefrorener Form verwendet werden.

Die verwendete Eigelb-Phospholipase-Emulgatormischung umfasst in einer Variante zwischen 1-2 g, bevorzugt 1,5 g mindestens einer Phospholipase pro kg Eigelb.

Phospholipasen sind Enzyme, die im Körper üblicherweise im Pankreassekret vorkommen und dort die Aufgabe übernehmen, Phopholipide zu spalten. Diese Gruppe von Enzymen wird in Phospholipasen A, B, C und D kategorisiert je nachdem, wo sie die Spaltung im Molekül vornehmen: Phospholipase A₁ spaltet eine ungesättigte Fettsäure an ihrer Esterbindung am C1-Atom; Phospholipase A₂: spaltet eine ungesättigte Fettsäure an ihrer Esterbindung am C2-Atom; Phospholipase B kann an Sn-1 und Sn-2 Position die Fettsäureesterbindung spalten, Phospholipase C spaltet vor Phosphoratom der Phosphatgruppe, Phospholipase D spaltet nach Phosphoratom

Bekannt sind auch chimere Phospholipasen, bei denen Gene von Lipasen aus erschiedenen Organismen zusammengefügt wurden. Eine bekannte chimere Phospholipase ist die Lecitase, die durch die Fusion der Gene der Lipase von Thermomyces lanuginosus und der Phospholipase A1 von Fusarium oxysporum hergestellt wird

Im vorliegenden Verfahren wird bevorzugt eine Phospholipase A2 verwendet.

Nach Beendigung des Pasteurisierungsvorganges wird das mindestens eine (nunmehr pasteurisierte) Lebensmittel auf eine Endtemperatur von 2 bis 4°C abgekühlt wird.

Der Abkühlprozess kann in Phasen bzw. Schritten mit unterschiedlichen Temperaturgardienten durchgeführt werden

So kann in der sich dem Pasteurisierungsvorgang anschließenden Abkühlphase das pasteurisierte Lebensmittel in einem ersten Schritt zunächst bei einer Temperatur zwischen - 18°C und - 22°C, bevorzugt -20°C auf eine Kerntemperatur von 16 bis 24°C, bevorzugt 18 bis 22°C, insbesondere bevorzugt 20°C abgekühlt werden. Die Abkühlung erfolgt in diesem Schritt somit mit einem steilen Temperaturgradienten. Das schnelle Abkühlen dient der Fixierung der Matrix, da es ansonsten zu einer Ausbildung von Wasserstoffbrücken und Disulfid-Brücken zwischen Fettsäuren und somit zu kristallinen Struktur kommen würde.

Nach Erreichen der Kerntemperatur von 16 bis 24°C, bevorzugt 18 bis 22°C, insbesondere bevorzugt 20°C wird der Abkühlungsprozess verlangsamt und das pasteurisierte Lebensmittel wird in einem zweiten Schritt bei einer Temperatur von -4°C bis 0°C, bevorzugt -3°C bis -1°C, insbesondere bevorzugt -2°C auf eine Temperatur von 2 bis 4°C abgekühlt.

Das vorliegende Verfahren eignet sich zur Pasteurisierung von Produkten, die Eigelb als Emulgator nutzen, also Pudding, Saucen, Phasen, Füllungen (z.B. im Kuchen oder in anderen Lebensmitteln), in Snacks, Bars, in Fertigspeiseprodukten, in Fleischprodukten u.a..

Die vorliegende Erfindung wird nachfolgend im Detail anhand von mehreren Ausführungsbeispielen erörtert.

### Ausführungsbeispiel 1:eine erste Ausführungsform des erfindungsgemäßen Verfahrens

Das Eigelb wird mit Phospholipase A (oder entsprechend Phopholipasen aus dem Schweinepankreas) versetzt und mit entsprechenden Geräten (Rührwerke, Rührmixer) aufgeschlagen. Nun wird die Masse gemäß den Vorgaben zunächst unter ständigem Rühren erhitzt und regelmäßig mit einem Rührmixer aufemulgiert (je nach Enzym auf eine entsprechende Kerntemperatur zur Aktivierung). Am besten geschieht dies in einem Konvektomaten bei hoher Luftfeuchtigkeit (80-95%) um Flüssigkeitsübergabg zu vermeiden.

Bei Erreichen einer produktspezifisch definierten Kerntemperatur wirkt die Lipase 2-4 Stunden auf das Eigelb (je nach Produkt 54-60°C). Anschließend wird das Enzym deaktiviert in dem es auf eine entsprechende produktspezifische Temperatur unter ständigem Emulgieren erhitzt wird -das geht oft um eine relativ kurzes Zeitfenster (6-12 Minuten) bei höheren Temperaturen (68-80°C). Es wird eine puddingartige Masse erhalten, die in der weiteren Verarbeitung für den Emulgationsprozess verwendet wird.

Wenn der Prozess jeweils abgeschlossen ist und das Eigelb entsprechende Emulgation hervorgerufen hat wird das Füllgut abgefüllt und in den Pasteurisierungsprozess gegeben: In einem Konvektomaten bei 100% Luftfeuchtigkeit wird das Füllgut auf eine Kerntemperatur von 70°C gebracht und dann für 45 Minuten pasteurisiert. Anschließend sollte es rasch herunter gekühlt werden, um den Protein-Denaturisierungsprozess zu unterbrechen.

Die Masse behält ihre cremigen, emulgierten Eigenschaften, ist jedoch als Halbkonserve verkäuflich pasteurisiert. Insbesondere für Fleischwurstprodukte kann so eine Haltbarkeit von über 9 Monaten MHD gewährleistet werden.

## Patentansprüche

1. Verfahren zur Pasteurisierung von mindestens einem eigelbhaltigen Lebensmittel, insbesonderezur Bereitstellung als Halbkonserve, umfassend die Schritte:
- Zugabe mindestens einer Emulgatormischung umfassend im Wesentlichen eiklarfreies Eigelb und mindestens eine Phospholipase zu dem mindestens einem Lebensmittel,
- Erwärmen des mit der Eigelb-Phospholipase- Emulgatormischung versehenen Lebensmittel auf eine (Kern)Temperatur zwischen 63°C und 75 °C, bevorzugt zwischen 65°C und 75°C, insbesondere bevorzugt zwischen 68°C und 72°C,
- Pasteurisieren des mit der Eigelb-Phospholipase- Emulgatormischung versehenen Lebensmittel für einen Zeitraum von 30-90 min, bevorzugt 35 - 70 Minuten, besonders bevorzugt 40-50 Minuten.

2. Verfahren nach Anspruch 1, **dadurch gekennzeichnet, dass** die mindestens eine Emulgatormischung aus Eigelb und mindestens einer Phospholipase in einem Verfahren mit den folgenden Schritten hergestellt wird:
a) Bereitstellen von im Wesentlichen eiklarfreien Eigelb und Zugabe der mindestens einen Phospholipase zum Eigelb;
b) Aktivieren der mindestens einen Phospholipase durch Erwärmen und Halten der Mischung aus Eigelb und Phospholipase bei einer Temperatur zwischen 45°C und 60°C, bevorzugt zwischen 50°C und 60°C, insbesondere bevorzugt zwischen 53°C und 55°C, über einen Zeitraum von 1 bis 4 h, bevorzugt 2 bis 3 h, und
c) anschließende Deaktivierung der Phospholipase durch Erhitzen der Mischung aus Eigelb und Phospholipase auf eine Temperatur zwischen 60°C und 90°C, bevorzugt zwischen 65°C und 85°C, insbesondere bevorzugt zwischen 68°C und 80°C, ganz besonders bevorzugt zwischen 72°C und 78°C über einen Zeitraum von 5 bis 15 min, bevorzugt 6 bis 12 Minuten, und Erhalt der fertig einsetzbaren Emulgatormischung.

3. Verfahren nach einem der vorhergehenden Ansprüche, **dadurch gekennzeichnet, dass** die Eigelb-Phospholipase-Emulgatormischung zwischen 1-2 g, bevorzugt 1,5 g mindestens einer Phospholipase pro kg eiklarfreien Eigelb umfasst.

4. Verfahren nach einem der vorhergehenden Ansprüche, **dadurch gekennzeichnet, dass** die mindestens eine Phospholipase eine Phospholipase A2 ist.

5. Verfahren nach einem der vorhergehenden Ansprüche, **dadurch gekennzeichnet, dass** nach Beendigung des Pasteurisierungsvorganges das mindestens eine (nunmehr pasteurisierte) Lebensmittel auf eine Endtemperatur von 2 bis 4°C abgekühlt wird.
